# EUROPEAN PATENT SPECIFICATION

(11) **EP 2 310 659 B1**
(45) Date of publication and mention of the grant of the patent: **21.03.2012**
(21) Application number: 09750163.9
(22) Date of filing: 19.05.2009
(51) Int. Cl.: F02M 25/12

(54) **WORKING GAS CIRCULATION ENGINE**
ARBEITSGASZIRKULATIONSMASCHINE
MOTEUR DE CIRCULATION DE GAZ DE TRAVAIL

(30) Priority: 20.05.2008 JP 2008132546
(43) Date of publication of application: 20.04.2011
(73) Proprietor: Toyota Jidosha Kabushiki Kaisha, Toyota-shi, Aichi-ken 471-8571 (JP)
(72) Inventor: KUROKI, Rentaro, Aichi-ken 471-8571 (JP); SAWADA, Daisaku, Aichi-ken 471-8571 (JP); MITANI, Shinichi, Aichi-ken 471-8571 (JP)
(74) Representative: Winter, Brandl, Fürniss, Hübner, Röss, Kaiser, Polte - Partnerschaft
(86) International application number: PCT/IB2009/005647
(87) International publication number: WO 2009/141706

(56) References cited:
- JP-A- 11 093 681
- JP-A- 2006 077 638
- US-A1- 2004 003 592

## Description

### 1. Field of the Invention

The invention relates generally to a gas circulation engine that has a combustion chamber and a circulation path that connects an intake-side portion and an exhaust-side portion of the combustion chamber to each other. More specifically, the invention relates to a working gas circulation engine that has a combustion chamber which is supplied with an oxidant, fuel, the combustion (oxidation) of which is promoted by the oxidant, and working gas that generates power with the use of combustion of the fuel, and a circulation path that connects an intake-side portion and an exhaust-side portion of the combustion chamber to each other, and that is formed in such a manner that the working gas is circulated back to the combustion chamber through the circulation path without being released into the atmosphere.

### 2. Description of the Related Art

A working gas circulation engine of this type is a so-called closed-cycle engine, and described in, for example, Japanese Patent Application Publication No. 11-93681 (JP-A-11-93681). In the working gas circulation engine described in JP-A-11-93681, oxygen and hydrogen are supplied to a combustion chamber as an oxidant and fuel, respectively, and argon is circulated as working gas in order to enhance the thermal efficiency. In the working gas circulation engine, argon is thermally expanded due to the combustion of hydrogen that takes place in the combustion chamber. The thermal expansion of argon pushes a piston down so that power is produced. Because water vapor is generated due to the combustion of hydrogen that takes place in the combustion chamber, the water vapor is discharged into a circulation path along with the argon. Therefore, in the working gas circulation engine, a condenser, which liquefies the water vapor to remove it, is provided in the circulation path so that only argon, which is used as the working gas, is circulated back to the combustion chamber.

In the condenser described above, exhaust gas that contains the argon, which is used as the working gas, and the water vapor are cooled by coolant, whereby the water content is separated from the exhaust gas in the form of condensed water. In this way, the water content is removed from the exhaust gas. In order to condense the water vapor, the exhaust gas needs to be cooled to a normal temperature. However, the temperature of the exhaust gas that is just discharged from the combustion chamber is very high. Therefore, a large-capacity condenser and a large-capacity radiator that cools the coolant are needed to cool the high-temperature exhaust gas to the normal temperature. However, such large-capacity condenser and large-capacity radiator may increase the vehicle weight, and may be too large to be mounted in an engine compartment that has a limited space. Therefore, there are limitations to increases in the capacities of the condenser and the radiator, which makes it difficult to obtain required cooling performance. Accordingly, the water vapor may not be entirely removed from the exhaust gas (the water vapor may partially remain in the exhaust gas) if the temperature of the exhaust gas or the ambient temperature is not appropriate.

In the working gas circulation engine, the high-temperature exhaust gas discharged from the combustion chamber is not released into the atmosphere, unlike in a so-called open-cycle engine. Therefore, the engine is repeatedly operated in the state where the exhaust gas is not sufficiently cooled in the condenser. Accordingly, the circulation path is warmed and the temperature of the working gas that circulates through the circulation path increases. As a result, the pressure in the circulation path increases, which may cause various inconveniences. For example, an increase in the pressure in the circulation path may reduce the durability of the circulation path. Also, an increase in the pressure in the circulation path may cause leakage of the working gas through a portion at which an engine body and a circulation pipe, which defines the circulation path, are connected to each other, or a portion at which the circulation pipe and the condenser are connected to each other. In the circulation path at a portion from the combustion chamber to the condenser, because the temperature of the working gas is especially high and the pressure is likely to be especially high, the pressure in the combustion chamber may also be increased abruptly.

In the working gas circulation engine, it is important to ensure sufficient exhaust gas cooling performance.

### SUMMARY OF THE INVENTION

The invention provides a working gas circulation engine provided with improved exhaust gas cooling performance.

An aspect of the invention relates to a working gas circulation engine that includes: a combustion chamber that is supplied with fuel, the combustion product of which is condensed, and working gas that generates power with the use of combustion of the fuel and that has a specific heat ratio higher than a specific heat ratio of the air; a circulation path that connects an inlet and an outlet of the combustion chamber to each other in such a manner that the working gas is circulated back to the combustion chamber without being released into the atmosphere; and at least two condensers that are provided in the circulation path, that are supplied with exhaust gas which is discharged from the combustion chamber and which contains the combustion product and the working gas, and that condense and remove the combustion product.
In the working gas circulation engine according to the aspect of the invention, the capacities of the respective condensers may be set in such a manner that, if the exhaust gas discharged from the combustion chamber has the highest possible temperature that may be achieved during an operation of the engine, the combustion product is substantially entirely condensed and removed by the time the exhaust gas finishes passing through the condenser that is farthest from the outlet of the combustion chamber among all the condensers.

In the working gas circulation engine according to the aspect of the invention, at least two condensers are provided. Therefore, it is possible to efficiently cool the high-temperature exhaust gas without reducing the ease in mounting the condensers in the engine compartment and without significantly increasing the vehicle weight.

In the working gas circulation engine according to the aspect of the invention, an exhaust gas inlet of the condenser that is closest to the outlet of the combustion chamber among all the condensers may be positioned near the outlet of the combustion chamber.

With the structure described above, the amount of exhaust gas that is present in the circulation path at a portion from the outlet of the combustion chamber to the condenser closest to the outlet is reduced. Therefore, it is possible to more appropriately suppress increases in the temperature and the pressure in the circulation path that may be caused by the high-temperature exhaust gas.

The condenser of which the exhaust gas inlet is positioned near the outlet of the combustion chamber may be arranged adjacent to an engine body, formed integrally with the engine body, or arranged at an exhaust pipe gathering portion of an exhaust manifold.

Coolant used to cool an engine body may be used in the condenser of which the exhaust gas inlet is positioned near the outlet of the combustion chamber.

With the working gas circulation engine according to the aspect of the invention described above, the water vapor (H₂O), which is the combustion product contained in the exhaust gas, is substantially entirely converted into the condensed water (H₂O) and discharged to the outside of the engine, and the working gas that has a higher specific heat ratio is supplied into the combustion chamber due to the improved exhaust gas cooling performance. Therefore, it is possible to prevent a decrease in the thermal efficiency that may be caused if the water vapor (H₂O) having a low specific heat ratio is supplied into the combustion chamber. In addition, with the working gas circulation engine, it is possible to prevent an excessive increase in the pressure in the circulation path due to the improved exhaust gas cooling performance. Accordingly, with the working circulation engine, it is possible to maintain the durability of the circulation path, and to prevent leakage of the exhaust gas through portions at which the circulation path is connected to various elements. As a result, it is possible to prevent a decrease in the thermal efficiency that may be caused due to shortage of the working gas.

### BRIEF DESCRIPTION OF THE DRAWINGS

The features, advantages and technical and industrial significance of this invention will be described in the following detailed description of example embodiments of the invention with reference to the accompanying drawings, wherein the same or corresponding portions will be denoted by the same reference numerals and wherein:
FIG 1 is a view showing the structure of a working gas circulation engine according to a first embodiment of the invention;
FIG 2 is a view showing the structure of a working gas circulation engine according to a second embodiment of the invention; and
FIG 3 is a view showing the structure of a working gas circulation engine according to a modification of the second embodiment of the invention.

### DETAILED DESCRIPTION OF THE EMBODIMENTS

Hereafter, gas circulation engines according to example embodiments of the invention will be described in detail with reference to the accompanying drawings. Note that the invention is not limited to the example embodiments described below.

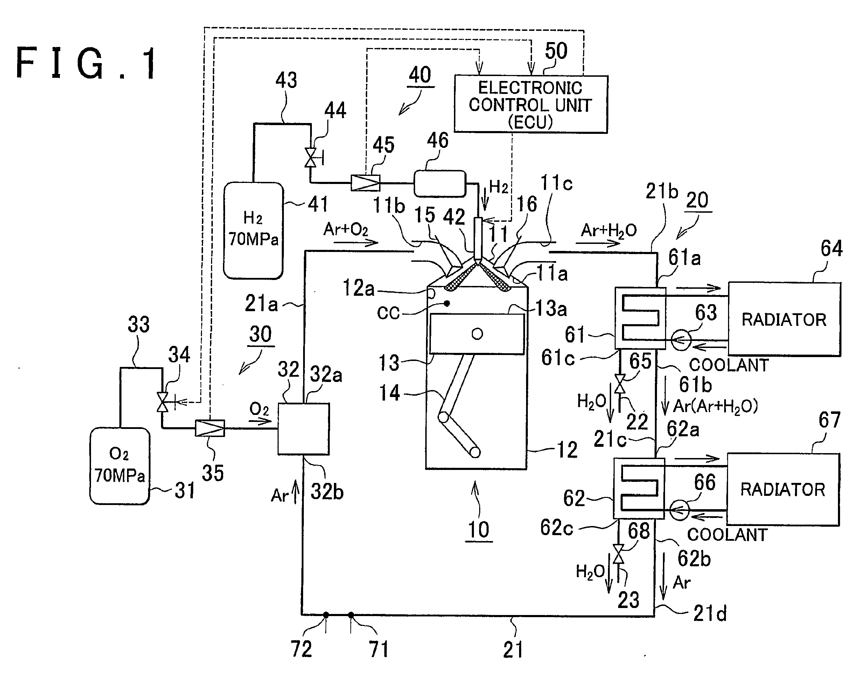

Hereafter, a working gas circulation engine according to a first embodiment of the invention will be described with reference to FIG. 1.

The working gas circulation engine according to the first embodiment of the invention is a so-called closed-cycle engine that has a combustion chamber which is supplied with fuel, a combustion-product of which is condensed, and working gas tat generates power with the use of combustion of the fuel and that has a specific heat ratio higher than that of air, and a circulation path which connects an inlet and an outlet of the combustion chamber to each other, and that is formed in such a manner that the working gas is circulated back to the combustion chamber through the circulation path without being released into the atmosphere. In the working gas circulation engine, the fuel is burned in the combustion chamber, whereby the working gas is thermally expanded to generate power. As the fuel the combustion-product of which is condensed, fuel of which the combustion is promoted by an oxidant, for example, hydrogen is used. After hydrogen is burned, water vapor is produced as a combustion-product, as described later in detail. In this case, the oxidant is also supplied into the combustion chamber.

First, the structure of the working gas circulation engine according to the first embodiment of the invention will be described with reference to FIG 1.

The working gas circulation engine includes an engine body 10 in which a combustion chamber CC is formed, a circulation path 20 that connects an inlet and an outlet of the combustion chamber CC to each other, an oxidant supply device 30 that supplies an oxidant into the combustion chamber CC, and a fuel supply device 40 that supplies the fuel into the combustion chamber CC. The combustion chamber CC and the circulation path 20 are filled with the working gas, and the working gas discharged from the combustion chamber CC is circulated back to the combustion chamber CC through the circulation path 20. FIG. 1 shows only one cylinder. However, the invention may be applied even when the engine body 10 includes multiple cylinders.

First, the engine body 10 will be described.

The engine body 10 includes a cylinder head 11 in which the combustion CC is formed, a cylinder block 12, and a piston 13. The piston 13 is connected to a crankshaft (not shown) via a connecting rod 14, and is arranged in such a manner that the piston 13 may reciprocate within a space that is defined by a wall face of a recess 11a formed in a bottom face of the cylinder head 11 and a wall face of a cylinder bore 12a of the cylinder block 12. The combustion chamber CC is a space defined by the wall face of the recess 11a of the cylinder head 11, the wall face of the cylinder bore 12a, and a top face 13a of the piston 13.

An intake port 11b and an exhaust port 11c that constitute part of the circulation path 20 are formed in the cylinder head 11. The intake port 11b and the exhaust port 11c open at first ends into the combustion chamber CC. At an opening of the intake port 11b into the combustion chamber CC, there is provided an intake valve 15, which opens the opening when the intake valve 11b is opened and which closes the opening when the intake valve 11b is closed. At an opening of the exhaust port 11c into the combustion chamber CC, there is provided an exhaust valve 16, which opens the opening when the exhaust valve 11c is opened and which closes the opening when the exhaust valve 16 is closed.

For example, valves that are opened and closed in accordance with rotation of a camshaft (not shown) and elastic forces of elastic members (coil springs) may be used as the intake valve 15 and the exhaust valve 16. When this type of valves are used as the intake valve 15 and exhaust valve 16, a power transmission mechanism that is formed of, for example, a chain or a sprocket is provided between the camshaft and the crankshaft. With the power transmission mechanism, rotation of the camshaft is linked to rotation of the crankshaft. In this way, the intake valve 15 and the exhaust valve 16 are opened at prescribed opening timing and closed at prescribed closing timing. The engine body 10 may be provided with a variable valve mechanism, for example, a so-called variable valve timing and lift mechanism, which is able to change the opening timing/closing timing and the lift amounts of the intake valve 15 and the exhaust valve 16. With this structure, the opening timing/closing timing and the lift amounts of the intake valve 15 and the exhaust valve 16 may be changed appropriately based on an engine operating state. Alternatively, a so-called electromagnetically-driven valve that opens and closes the intake valve 15 and the exhaust valve 16 using an electromagnetic force may be used in the engine body 10. In this case as well, it is possible to obtain the same effects as those obtained by the variable valve operation mechanism.

Next, the circulation path 20 will be described.

The circulation path 20 is formed of the intake port 11b, the exhaust port 11c, and a circulation passage 21 that connects a second end of the intake port 11b and a second end of the exhaust port 11c to each other. With this structure, a closed space is formed within the circulation path 20 and the combustion chamber CC.

In the working gas circulation engine, the working gas is supplied into the closed space, and the working gas is circulated in such a manner that the working gas is supplied from the circulation path 20 into the combustion chamber CC through the intake port 11b, from the combustion chamber CC to the circulation path 20 through the exhaust port 11c, and from the exhaust port 11c to the intake port 11b through the circulation passage 21. When the intake valve 15 is opened, the working gas in the circulation passage 21 is supplied into the combustion chamber CC through the intake port 11b. When the exhaust valve 16 is opened, the working gas in the combustion chamber CC is discharged together with the gas, which is obtained after the fuel is burned, to the circulation passage 21 through the exhaust port 11c. That is, the working gas discharged from the combustion chamber CC is circulated back to the combustion chamber CC through the circulation path 20 without being released into the atmosphere.

As the working gas, monatomic gas (more specifically, rare gas, for example, argon or helium) that has a specific heat ratio higher than that of air is used. In the first embodiment of the invention, argon (Ar) is used as the working gas.

More specifically, the circulation passage 21 according to the first embodiment of the invention is formed of a first circulation passage 21 a, a second circulation passage 21 b, a third circulation passage 21 c and a fourth circulation passage 21d. The first circulation passage 21 a connects the second end of the intake port 11b to an outlet 32a of an oxidant supply unit 32, described later in detail, of the oxidant supply device 30. The second circulation passage 21b connects the second end of the exhaust port 11c to an exhaust gas inlet 61a of an upstream-side condenser 61, described later in detail. The third circulation passage 21c connects a working gas outlet 61b of the upstream-side condenser 61 to an exhaust gas inlet 62a of a downstream-side condenser 62. The fourth circulation passage 21d connects a working gas outlet 62b of the downstream-side condenser 62 to a working gas inlet 32b of the oxidant supply unit 32. Note that, the expressions "upstream" and "downstream" in this specification mean "upstream" and "downstream" in the direction in which the exhaust gas discharged from the combustion chamber CC flows.

Next, the oxidant supply device 30 will be described.

The oxidant supply device 30 includes an oxidant storage tank 31 in which the oxidant is stored at high pressure, the oxidant supply unit 32 that supplies the oxidant into the circulation passage 21, an oxidant supply passage 33 that connects the oxidant storage tank 31 to the oxidant supply unit 32, a regulator 34 that is provided in the oxidant supply passage 33, and an oxidant flowmeter 35. In the oxidant supply passage 33, the regulator 34 is provided at a position upstream of the oxidant flowmeter 35 (the regulator 34 is closer to the oxidant storage tank 31 than the flowmeter 35).

In the first embodiment of the invention, the oxidant is mixed with the working gas in the circulation passage 21 and then supplied to the circulation passage 21, instead of being supplied alone to the circulation passage 21. Therefore, the oxidant supply unit 32 used in the first embodiment of the invention is an oxidant mixing unit that mixes the oxidant from the oxidant supply passage 33 with the working gas from the circulation passage 21 and delivers the oxidant and the working gas from the outlet 32a to the circulation passage 21 at a portion that is downstream of the oxidant supply unit 32 (that is close to the intake port 11b). Therefore, the oxidant is supplied into the combustion chamber CC together with the working gas through the intake port 11b when the intake valve 15 is opened.

The regulator 34 regulates the pressure in the oxidant supply passage 33 at a portion downstream of the regulator 34 (at a portion close to the oxidant flowmeter 35) to a target pressure according to a command from an electronic control unit (ECU) 50. In other words, the regulator 34 is used to control the flow rate of the oxidant in the oxidant supply passage 33. The oxidant flowmeter 35 is a device that measures the flow rate of the oxidant in the oxidant supply passage 33, which is regulated by the regulator 34. A signal indicating the result of measurement performed by the oxidant flowmeter 35 is transmitted to the electronic control unit 50.

In the first embodiment of the invention, oxygen (O₂) is used as the oxidant. Therefore, oxygen (O₂) is stored in the oxidant storage tank 31 at high pressure, for example, 70 MPa.

Next, the fuel supply device 40 will be described.

The fuel supply device 40 includes a fuel storage tank 41 in which the fuel is stored at high pressure, a fuel injection device 42 that injects the fuel, a fuel supply passage 43 that connects the fuel storage tank 41 to the fuel injection device 42, a regulator 44 that is provided in the fuel supply passage 43, a fuel flowmeter 45, and a surge tank 46. In the fuel supply passage 43, the regulator 44, the fuel flowmeter 45 and the surge tank 46 are provided in this order from the upstream side (fuel storage tank 41-side).

In the first embodiment of the invention, the fuel injection device 42 is provided at the cylinder head 11 so that the fuel is injected directly into the combustion chamber CC. The fuel injection device 42 is a so-called fuel injection valve that is controlled by the electronic control unit 50. For example, the electronic control unit 50 controls the timing at which the fuel is injected and the injection amount of fuel based on the engine operating state, for example, the engine speed.

The regulator 44 regulates the pressure in the fuel supply passage 43 at a portion downstream of the regulator 44 (at a portion close to the fuel flowmeter 45 and the surge tank 46) to a prescribed pressure. In other words, the regulator 44 is used to control the flow rate of the fuel in the fuel supply passage 43. The fuel flowmeter 45 is a device that measures the flow rate of the fuel in the fuel supply passage 43, which is regulated by the regulator 44. A signal indicating the result of measurement performed by the fuel flowmeter 45 is transmitted to the electronic control unit 50. The surge tank 46 is used to reduce pulsations generated in the fuel supply passage 43 when the fuel injection device 42 injects the fuel.

In the first embodiment of the invention, hydrogen (H₂) is used as the fuel. Therefore, hydrogen (H₂) is stored in the fuel storage tank 41 at high pressure, for example, 70 MPa.

In the working gas circulation engine according to the first embodiment of the invention, hydrogen (H₂), used as the fuel, and oxygen (O₂), used as the oxidant, are supplied into the combustion chamber CC, and diffusion combustion of the hydrogen (H₂) is performed. Therefore, in this working gas circulation engine, high-pressure hydrogen (H₂) is injected into high-temperature compressed gas (oxygen (O₂) and argon (Ar)) formed in the combustion chamber CC, whereby part of the hydrogen (H₂) self-ignites. Then, the hydrogen (H₂) and the compressed gas (oxygen (O₂)) are burned while being diffusively mixed together. Due to the combustion of the hydrogen (H₂), the hydrogen (H₂) and the oxygen (O₂) bind together to form water vapor (H₂O) and thermal expansion of argon (Ar) that has high specific heat ratio takes place in the combustion chamber CC. Therefore, in the working gas circulation engine, the piston 13 is pushed down due to the diffusion combustion of hydrogen (H₂) and the thermal expansion of argon (Ar), whereby power is generated.

When the combustion of hydrogen (H₂) and the thermal expansion of argon (Ar) are completed (e.g. when the piston 13 is near the bottom dead center), the water vapor (H₂O) and the argon (Ar) are discharged from the combustion chamber CC into the exhaust port 11c when the exhaust valve 16 is opened. The discharged argon (Ar) needs to be circulated back to the combustion chamber CC through the circulation path 20 and the intake port 11b so that the thermal efficiency of the engine body 10 is enhanced. However, the water vapor (H₂O) that is discharged together with the argon (Ar) is triatomic, and has a specific heat ratio that is lower than that of the argon (Ar). Therefore, if the water vapor (H₂O) is circulated back to the combustion chamber CC together with the argon (Ar), the thermal efficiency of the engine body 10 may be reduced. Therefore, a device that removes the water vapor (H₂O) contained in the exhaust gas is provided in the circulation path 20.

As the device that removes the water vapor (H₂O) contained in the exhaust gas, there is used a condenser that cools the exhaust gas, which contains the argon (Ar) used as the working gas and the water vapor (H₂O), with the use of a cooling medium (coolant, in this case), and condenses the water vapor (H₂O) contained in the exhaust gas to separate the argon (Ar) and the condensed water (H₂O) from each other and to remove the condensed water (H₂O). In the first embodiment of the invention, at least two condensers of the above-mentioned type are provided in the circulation path 20 so that the high-temperature exhaust gas is cooled more efficiently while the condensers are more easily mounted in the engine compartment.

More specific description will be provided below. In the first embodiment of the invention, the upstream-side condenser 61, which is at a position close to the outlet of the combustion chamber CC, and the downstream-side condenser 62, which is at a position distant from the outlet of the combustion chamber CC than the upstream-side condenser 61 is, are provided in the circulation passage 21, as shown in FIG. 1.

In this case, the condensers 61 and 62 are provided in the circulation passage 21 at positions upstream of the oxidant supply unit 32. At least the upstream-side condenser 61 is arranged in such a manner that the exhaust gas inlet thereof is at a position close to the outlet of the combustion chamber CC. With this structure, the high-temperature exhaust gas is cooled at an early stage. In other words, the upstream-side condenser 61 is provided at a position close to the engine body 10. Note that, in FIG. 1, the upstream-side condenser 61 is at a position distant from the engine body 10 (outlet of the combustion chamber CC) just for convenience in illustration.

The exhaust gas inlet 61 a of the upstream-side condenser 61 is connected to the second circulation passage 21b, and the working gas outlet 61b of the upstream-side condenser 61 is connected to the third circulation passage 21 c. In the upstream-side condenser 61, the high-temperature exhaust gas flowing from the exhaust gas inlet 61a is cooled by the circulating coolant, whereby the water vapor (H₂O) contained in the exhaust gas is condensed and the argon (Ar) and the condensed water (H₂O) are separated from each other. The coolant is circulated between the upstream-side condenser 61 and a radiator 64 by a water pump 63. In the upstream-side condenser 61, if the temperature of the exhaust gas flowing therein is low, the entirety of the water vapor (H₂O) contained in the exhaust gas is condensed into the condensed water (H₂O). However, if the temperature of the exhaust gas flowing in the upstream-side condenser 61 is high, part of the water vapor (H₂O) may remain uncondensed. Therefore, the argon (Ar), or the argon (Ar) and the water vapor (H₂O) is/are discharged from the upstream-side condenser 61 into the third circulation passage 21c through the working gas outlet 61 b, while the condensed water (H₂O) is discharged into a condensed water passage 22 through a condensed water outlet 61c. The condensed water (H₂O) is discharged to the outside of the working gas circulation engine when the electronic control unit 50 opens an on-off valve 65 which has been fully closed. Note that, in at least one of the two condensers, the coolant used to cool the engine body 10 is used.

Next, the downstream-side condenser 62 will be described. The structure of the downstream-side condenser 62 is similar to that of the upstream-side condenser 61. The exhaust gas inlet 62a of the downstream-side condenser 62 is connected to the third circulation passage 21c, and the working gas outlet 62b of the downstream-side condenser 62 is connected to the fourth circulation passage 21d. The exhaust gas (the argon (Ar), or the argon (Ar) and the water vapor (H₂O)), which is cooled in the upstream-side condenser 61, flows into the downstream-side condenser 62 through the exhaust gas inlet 62a. Therefore, in the downstream-side condenser 62, if the water vapor (H₂O) remains in the exhaust gas, the exhaust gas is cooled by the circulating coolant, whereby the water vapor (H₂O) in the exhaust gas is condensed and the argon (Ar) and the condensed water (H₂O) are separated from each other. The coolant is circulated between the downstream-side condenser 62 and a radiator 67 by a water pump 66. In this case, the exhaust gas is cooled to the normal temperature because the capacities of the condensers 61 and 62 and the radiators 64 and 67 are appropriately set as described later in detail. Therefore, the entirety of the water vapor (H₂O) that remains in the exhaust gas is condensed into the condensed water (H₂O). In the downstream-side condenser 62, if the water vapor (H₂O) does not remain in the exhaust gas, the argon (Ar) is delivered to the working gas outlet 62b without being cooled or after being cooled. Therefore, the argon (Ar) is discharged from the downstream-side condenser 62 into the fourth circulation passage 21 d through the working gas outlet 62b, while the condensed water (H₂O), if it is formed in the downstream-side condenser 62, is discharged into a condensed water passage 23 through a condensed water outlet 62c. The condensed water (H₂O) is discharged to the outside of the working gas circulation engine when the electronic control unit 50 opens an on-off valve 68 which has been fully closed.

The capacities (i.e., exhaust gas cooling performance) of the condensers 61 and 62 and the radiators 64 and 67 are set in such a manner that, if the exhaust gas, which has the highest possible temperature that may be achieved during engine operation, is discharged from the combustion chamber CC, the temperature of the exhaust gas is finally reduced to the temperature (normal temperature) at which the entirety of the water vapor (H₂O) in the exhaust gas is condensed. That is, the capacities of the condensers 61 and 62 and the radiators 64 and 67 are set in such a manner that the water vapor (H₂O) in the exhaust gas is almost entirely entirely removed by the time the exhaust gas finishes passing through the downstream-side condenser 62. Thus, when the exhaust gas is circulated back to the combustion chamber CC, the water vapor (H₂O) that has a low specific heat ratio is not supplied into the combustion chamber CC, and the argon (Ar) that is used as the working gas having a high specific heat ratio is supplied into the combustion chamber CC. Therefore, the engine is operated while the high heat efficiency is maintained by the working gas.

These capacities are set based on the results of experiments and simulations. Preferably, the capacities of the condensers 61 and 62 and the radiators 64 and 67 are set in such a manner that the capacity of the upstream-side condenser 61 is larger than the capacity of the downstream-side condenser 62. In this way, the condensers 61 and 62 are mounted in the engine compartment more easily. With this structure, the exhaust gas discharged from the combustion chamber CC is cooled greatly in the upstream-side condenser 61, which has a larger capacity, at an early stage. Therefore, a significant temperature increase in the circulation path 20 due to the high-temperature exhaust gas is prevented, and an excessive increase in the pressure in the circulation path 20 is also prevented. Accordingly, in the working gas circulation engine, it is possible to maintain sufficient durability of the circulation path 20 and to prevent leakage of the exhaust gas through portions at which the circulation path 20 is connected to the engine body 10, etc.

The exhaust gas discharged from the combustion chamber CC may contain not only the water vapor (H₂O) and the argon (Ar) but also hydrogen (H₂) or oxygen (O₂). For example, when the amount of hydrogen (H₂) supplied into the combustion chamber CC is larger than the amount of oxygen (O₂) supplied into the combustion chamber CC, part of the hydrogen (H₂) is left unburned and the unburned hydrogen (H₂) is discharged to the circulation path 20. On the other hand, when the amount of oxygen (O₂) supplied into the combustion chamber CC is larger than the amount of hydrogen (H₂) supplied into the combustion chamber CC, part of the oxygen (O₂) is left unused and the unused oxygen (O₂) is discharged to the circulation path 20. The hydrogen (H₂) or the oxygen (O₂) in the exhaust gas is separated from the water vapor (H₂O) in the condensers 61 and 62, and then discharged to the fourth circulation passage 21d together with the argon (Ar). Therefore, the hydrogen (H₂) or the oxygen (O₂) is also circulated back to the combustion chamber CC.

Therefore, in the working gas circulation engine, in order to prevent the amount of hydrogen (H₂) or oxygen (O₂) in the combustion chamber CC from being excessive, the amount of hydrogen (H₂) or the amount of oxygen (O₂) in the exhaust gas is determined, and the amount of hydrogen (H₂) that is injected from the fuel supply device 40 or the amount of oxygen (O₂) that is supplied from the oxidant supply device 30 is adjusted with the timing, at which the hydrogen (H₂) or the oxygen (O₂) reaches the combustion chamber CC, taken into account. In the first embodiment of the invention, a hydrogen concentration detection device (a hydrogen concentration sensor 71) that detects the hydrogen concentration in the exhaust gas and an oxygen concentration detection device (an oxygen concentration sensor 72) that detects the oxygen concentration in the exhaust gas are provided in the fourth circulation passage 2 1 d of the circulation passage 21. Then, the hydrogen concentration sensor 71 and the oxygen concentration sensor 72 transmit signals indicating detection results to the electronic control unit 50. In this way, the electronic control unit 50 determines the amount of hydrogen (H₂) or oxygen (O₂) that remains in the exhaust gas based on the detection signal, and controls the amount of hydrogen (H₂) that is injected from the fuel injection device 42 or the target pressure for the regulator 34 (that is, the supply amount of oxygen (O₂)) with the timing, at which the hydrogen (H₂) or the oxygen (O₂) reaches the combustion chamber CC, taken into account.

As described above, in the working gas circulation engine according to the first embodiment of the invention, at least two condensers are provided. Therefore, it is possible to efficiently cool the high-temperature exhaust gas without reducing the ease in mounting the condensers in the engine compartment (i.e., without upsizing the condenser and the radiator in order to increase the capacities of the condenser and the radiator), and without significantly increasing the vehicle weight. Therefore, the exhaust gas that has passed through the downstream-side condenser 62 contains no water vapor (H₂O) or only a small amount of water vapor (H₂O). As a result, in the working gas circulation engine, it is possible to prevent a decrease in the thermal efficiency that may be caused by the water vapor (H₂O) having a low specific heat ratio.

Further, in the working gas circulation engine, it is possible to prevent an excessive increase in the pressure in the circulation path 20 because the exhaust gas cooling performance is improved. Therefore, sufficient durability of the circulation path 20 of the working gas circulation engine is maintained. Further, in the working gas circulation engine, leakage of the exhaust gas through the portions at which the circulation path 20 is connected to the engine body 10, etc. is prevented. As a result, it is possible to prevent a decrease in the thermal efficiency that may be caused due to shortage of the working gas.

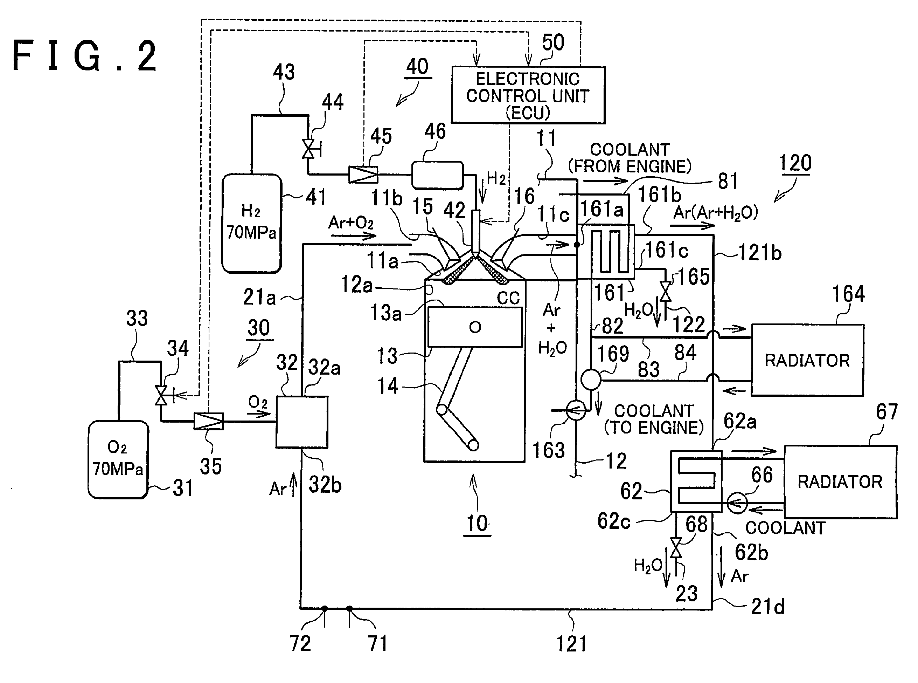

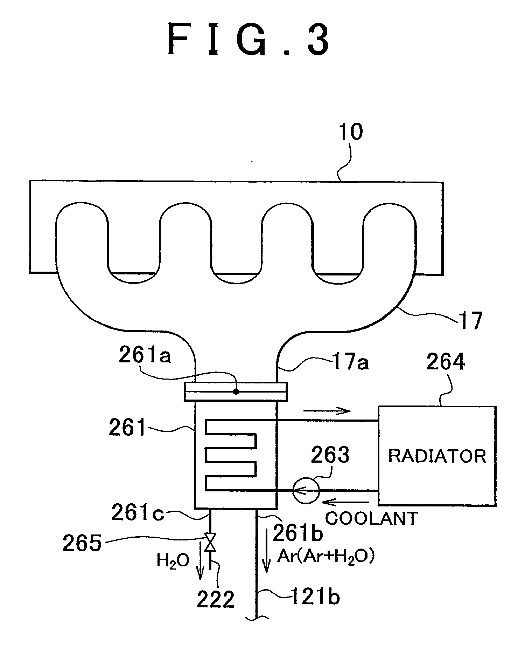

Next, a working gas circulation engine according to a second embodiment of the invention will be described with reference to FIGs. 2 and 3.

In the working gas circulation engine according to the second embodiment of the invention, an upstream-side condenser 161 is used instead of the upstream-side condenser 61 used in the working gas circulation engine according to the first embodiment of the invention. In the second embodiment of the invention, a circulation path 120, which is formed by changing part of the structure of the circulation path 20 in the first embodiment of the invention, is used because the upstream-side condenser 161 is used instead of the upstream-side condenser 61.

In the first embodiment of the invention described above, the upstream-side condenser 61 is provided at a position close to the engine body 10 (outlet of the combustion chamber CC). However, in the first embodiment of the invention, there is the second circulation passage 21b between the engine body 10 (outlet of the combustion chamber CC) and the upstream-side condenser 61. Therefore, the circulation path 20 may be warmed by the high-temperature exhaust gas in the second circulation passage 21b, and the exhaust gas (working gas, etc.) may leak through the portions at which the second circulation passage 21b is connected to the engine body 10, etc. That is, there is room for improvement in the exhaust gas cooling performance in the working gas circulation engine according to the first embodiment of the invention.

Therefore, according to the second embodiment of the invention, the exhaust gas cooling performance is further improved by using the upstream-side condenser 161, the circulation path 120, etc. shown in FIG. 2 instead of the upstream-side condenser 61, the circulation path 20, etc.

The upstream-side condenser 161 according to the second embodiment of the invention is provided at a position as close as possible to the combustion chamber CC.

For example, in an example shown in FIGS 2, an exhaust gas inlet 161a is arranged at the downstream-side end of the exhaust port 11c, and the upstream-side condenser 161 is fitted to the engine body 10 or formed integrally with the engine body 10. A working gas outlet 161b of the upstream-side condenser 161 is connected to a second circulation passage 121b, and the exhaust gas (the argon (Ar), or the argon (Ar) and the water vapor (H₂O)), which is quickly cooled in the upstream-side condenser 161 after being discharged from the exhaust port 11c, is delivered to the downstream-side condenser 62 through the second circulation passage 121b.

As in the first embodiment of the invention, the fourth circulation passage 21 d is connected to the working gas outlet 62b of the downstream-side condenser 62. That is, the circulation path 120 according to the second embodiment of the invention is formed by replacing the circulation passage 21 in the first embodiment of the invention with a circulation passage 121 in FIG 2. The circulation passage 121 is formed of the first circulation passage 21 a and the fourth circulation passage 21 d, which are used in the first embodiment of the invention as well, and the second circulation passage 121b between the upstream-side condenser 161 and the downstream-side condenser 62.

In the upstream-side condenser 161, the high-temperature exhaust gas, which is supplied from the exhaust port 11c into the upstream-side condenser 161 through the exhaust gas inlet 161a, is cooled by the circulating coolant, whereby the water vapor (H₂O) contained in the exhaust gas is condensed and the argon (Ar) and the condensed water (H₂O) are separated from each other. That is, the exhaust gas is cooled at an earlier stage in the upstream-side condenser 161 in the second embodiment of the invention than in the upstream-side condenser 61 in the first embodiment of the invention. Accordingly, it is possible to more appropriately suppress increases in the temperature and the pressure in the circulation path due to the high-temperature exhaust gas. If the temperature of the exhaust gas flowing into the upstream-side condenser 161 is low, the water vapor (H₂O) in the exhaust gas is almost entirely entirely condensed into the condensed water (H₂O). On the other hand, if the temperature of the exhaust gas flowing into the upstream-side condenser 161 is high, part of the water vapor (H₂O) may remain uncondensed. Therefore, only the argon (Ar), or the argon (Ar) and the water vapor (H₂O) is/are discharged from the working gas outlet 161b of the upstream-side condenser 161, while the condensed water (H₂O) is discharged into a condensed water passage 122 through a condensed water outlet 161c. The condensed water (H₂O) is discharged to the outside of the working gas circulation engine when the electronic control unit 50 opens an on-off valve 165 which has been fully closed.

In the upstream-side condenser 161, the coolant may be circulated and cooled by the water pump 63 and the radiator 64 which are arranged in the same manner as that in the first embodiment of the invention. However, the coolant for the engine body 10 is used in this case.

In order to form a circulation path through which the coolant from the engine body 10 is circulated, there are provided a first coolant passage 81 through which the coolant is introduced from a coolant passage in the engine body 10 (more specifically, the cylinder head 11) into the upstream-side condenser 161, a second coolant passage 82. through which the coolant discharged from the upstream-side condenser 161 is returned to a coolant passage in the engine body 10 (more specifically, the cylinder block 12), and a water pump 163 that is provided in the second coolant passage 82 and that delivers the coolant in the second coolant passage 82 toward the engine body 10 (cylinder block 12), as shown in FIG. 2. In this case, the coolant is circulated between the engine body 10 and the upstream-side condenser 161 by the water pump 163.

If the coolant that is warmed by passing through the upstream-side condenser 161 is returned to the engine body 10 without being cooled, the engine body 10 is not cooled sufficiently. Therefore, there are provided a radiator 164 that cools the coolant which has passed through the upstream-side condenser 161, and a thermostat 169 that controls the manner in which the coolant that has passed through the upstream-side condenser 161 is returned to the engine body 10 based on the temperature of the coolant. That is, it is determined whether the coolant that has passed through the upstream-side condenser 161 should be returned to the engine body 10 without passing through the radiator 164 or the coolant should be returned to the engine body 10 after passing through the radiator 164.

The radiator 164 is connected to the second cooling passage 82 via two coolant passages (a third coolant passage 83 and a fourth coolant passage 84) shown in FIG 2. Through the third coolant passage 83, the coolant in the coolant passage 82 is introduced into the radiator 164. Through the fourth coolant passage 84, the coolant is returned from the radiator 164 to the second coolant passage 82.

The thermostat 169 is provided at a position at which the second coolant passage 82 and the fourth coolant passage 84 are connected to each other. The thermostat 169 determines, based on the temperature of the coolant, whether the coolant should be returned to the engine body 10 without being cooled in the radiator 164 or the coolant should be returned to the engine body 10 after being cooled in the radiator 164. Such a determination may be made based on whether the engine body cooling efficiency will be reduced if the coolant, which is warmed by passing through the upstream-side condenser 161, is returned to the engine body 10 without being cooled.

In the second embodiment of the invention, the capacities (i.e., exhaust gas cooling performance) of the condensers 161 and 62 and the downstream-side radiator 67 are set in such a manner that, if the exhaust gas, which has the highest possible temperature that may be achieved during engine operation, is discharged from the combustion chamber CC, the temperature of the exhaust gas is finally reduced to the temperature (normal temperature) at which the entirety of the water vapor (H₂O) in the exhaust gas is condensed. That is, the capacities of the condensers 161 and 62 and the radiator 67 are set in such a manner that the entirety of the water vapor (H₂O) in the exhaust gas is removed by the time the exhaust gas finishes passing through the downstream-side condenser 62. Thus, when the exhaust gas is circulated back to the combustion chamber CC, the water vapor (H₂O) that has a low specific heat ratio is not supplied into the combustion chamber CC, and the argon (Ar) that is used as the working gas having a high specific heat ratio is supplied into the combustion chamber CC. Therefore, the engine is operated while the high heat efficiency is maintained by the working gas.

These capacities are set based on the results of experiments and simulations. Preferably, the capacities of the condensers 161 and 62 and the radiator 67 are set in such a manner that the capacity of the upstream-side condenser 161 is larger than the capacity of the downstream-side condenser 62. In this way, the condensers 161 and 62 are mounted in the engine compartment more easily. With this structure, the exhaust gas discharged from the combustion chamber CC is cooled greatly in the upstream-side condenser 161, which has a larger capacity, at an early stage. In addition, the distance between the upstream-side condenser 161 and the outlet of the combustion chamber CC is shorter than the distance between the upstream-side condenser 61 and the outlet of the combustion chamber CC in the first embodiment of the invention. Therefore, a significant temperature increase in the, circulation path due to the high-temperature exhaust gas is prevented more reliably, and an excessive increase in the pressure in the circulation path is also prevented more reliably according to the second embodiment of the invention. Accordingly, in the working gas circulation engine according to the second embodiment of the invention, it is possible to maintain sufficient durability of the circulation path 120 and to prevent leakage of the exhaust gas through portions at which the circulation path 120 is connected to the engine body 10, etc.

As described above, in the working gas circulation engine according to the second embodiment of the invention, at least two condensers are provided, and one of the condensers is provided in such a manner that the distance between this condenser and the engine body 10 (outlet of the combustion chamber CC) is shorter than the distance between the upstream-side condenser 61 and the engine body 10 in the first embodiment of the invention. Therefore, it is possible to cool the high-temperature exhaust gas more efficiently in the second embodiment of the invention than in the first embodiment of the invention, without reducing the ease in mounting the condensers in the engine compartment (i.e., without upsizing the condenser and the radiator in order to increase the capacities of the condenser and the radiator), and without significantly increasing the vehicle weight. The amount of high-temperature exhaust gas that is present in the circulation path at a portion between the combustion chamber CC and the upstream-side condenser is smaller in the working gas circulation engine according to the second embodiment of the invention than in that according to the first embodiment of the invention. Accordingly, higher exhaust gas cooling performance is achieved according to the second embodiment of the invention. The exhaust gas that has passed through the downstream-side condenser 62 contains no water vapor (H₂O). As a result, in the working gas circulation engine according to the second embodiment of the invention as in the working gas circulation engine according to the first embodiment of the invention, it is possible to prevent a decrease in the thermal efficiency that may be caused by the water vapor (H₂O) having a low specific heat ratio.

Further, it is possible to prevent an excessive increase in the pressure in the circulation path more reliably by providing higher exhaust gas cooling performance in the working gas circulation engine according to the second embodiment of the invention than in the working gas circulation engine according to the first embodiment of the invention. Therefore, sufficient durability of the circulation path of the working gas circulation engine is maintained more reliably according to the second embodiment of the invention. Further, in the working gas circulation engine according to the second embodiment of the invention, leakage of the exhaust gas through the portions at which the circulation path 120 is connected to the engine body 10, etc. is prevented. As a result, it is possible to prevent a decrease in the thermal efficiency that may be caused due to shortage of the working gas.

The upstream-side condenser 161 may be provided in such a manner that the distance between the upstream-side condenser 161 and the outlet of the combustion chamber CC is shorter than that described above. With this structure, the above-described effect is obtained more reliably. For example, the upstream-side condenser 161 may be formed in such a manner that the coolant passage is formed within the cylinder head 11 at a position around the exhaust port 11c and the passage through which the condensed water (H₂O) is discharged to the outside of the working gas circulation engine is formed within the cylinder head 11 so as to branch from the exhaust port 11c.

When the engine body 10 has multiple cylinders, a condenser 261 may be provided at a gathering portion 17a of an exhaust manifold 17, as shown in FIG 3. With this structure, the above-described effect is obtained more reliably. In this case, the condenser 261 is fitted to the exhaust manifold 17 by bonding an exhaust gas inlet 261 a and an end of the gathering portion 17a together, and the second circulation passage 121b is connected to a working gas outlet 261b of the condenser 261. Although not shown in FIG. 3, the downstream-side condenser 62 and the radiator 67, which are the same as those described above, are provided downstream of the condenser 261.

In the condenser 261, the high-temperature exhaust gas, which is supplied from the cylinders through the exhaust manifold 17 and the exhaust gas inlet 261a into the condenser 261, is cooled by the circulating coolant, and the water vapor (H₂O) contained in the exhaust gas is condensed and the argon (Ar) and the condensed water (H₂O) are separated from each other. The exhaust gas is cooled at an earlier stage in the condenser 261 than in the upstream-side condenser 61 according to the first embodiment of the invention. Accordingly, it is possible to more appropriately suppress increases in the temperature and the pressure in the circulation path that may be caused by the high-temperature exhaust gas. If the temperature of the exhaust gas that flows in the condenser 261 is low, the entirety of the water vapor (H₂O) in the exhaust gas is condensed into the condensed water (H₂O). However, if the temperature of the exhaust gas that flows in the condenser 261 is high, part of the water vapor (H₂O) may remain uncondensed. Therefore, only the argon (Ar), or the argon (Ar) and the water vapor (H₂O) is/are discharged from the working gas outlet 261b of the condenser 261, while the condensed water (H₂O) is discharged into a condensed water passage 222 through a condensed water outlet 261c. The condensed water (H₂O) is discharged to the outside of the working gas circulation engine when the electronic control unit 50 opens an on-off valve 265 which has been fully closed.

The coolant that flows in the condenser 261 is circulated between the condenser 261 and a radiator 264 by a water pump 263. Alternatively, the coolant for the engine 10 may be used as the coolant that flows in the condenser 261, as in the example shown in FIG. 2. In this case, the radiator 164, etc. may be used, as in the example shown in FIG. 2.

The capacities (i.e., exhaust gas cooling performance) of the condensers 261 and 62 and the radiators 264 and 67 are set in such a manner that, if the exhaust gas having the highest possible temperature that may be achieved during engine operation is discharged from the combustion chamber CC, the temperature of the exhaust gas is finally reduced to the temperature (normal temperature) at which the water vapor (H₂O) in the exhaust gas is almost entirely entirely condensed. That is, the capacities of the condensers 261 and 62 and the radiators 264 and 67 are set in such a manner that the entirety of the water vapor (H₂O) in the exhaust gas is removed by the time the exhaust gas has passed through the downstream-side condenser 62. Thus, when the exhaust gas is circulated back to the combustion chamber CC, the water vapor (H₂O) that has a low specific heat ratio is not supplied into the combustion chamber CC, and the argon (Ar) that is used as the working gas having a high specific heat ratio is supplied into the combustion chamber CC. Therefore, the engine is operated while the high heat efficiency is maintained by the working gas.

In the first and second embodiments of the invention, the fuel injection device 42 is provided in such a manner that the fuel is injected, directly into the combustion chamber CC. Alternatively, the fuel injection device 42 may be fitted to the cylinder head 11 so that the fuel is injected into the intake port 11b. That is, the invention described in the first and second embodiments may be applied to a so-called port injection working gas circulation engine. In this case as well, the same effects as those in the first and second embodiments may be obtained.

In the working gas circulation engine according to the first and second embodiments of the invention, diffuse combustion of hydrogen (H₂), used as fuel, is performed. Alternatively, the fuel may be ignited by a spark plug (not shown) and so-called spark ignition combustion may be performed. Further alternatively, a spark plug may be used to assist ignition and diffuse combustion may be performed. In various working gas circulation engines that differ in combustion manner, it is possible to obtain the effects that are the same as those in the first and second embodiments of the invention.

As described above, the gas circulation engines according to the embodiments of the invention are useful in improving the exhaust gas cooling performance.

## Claims

1. A working gas circulation engine, comprising:
a combustion chamber (CC) that is supplied with fuel, a combustion product of which is condensed, and working gas that generates power with use of combustion of the fuel and that has a specific heat ratio higher than a specific heat ratio of air;
a circulation path (20, 120) that connects an inlet and an outlet of the combustion chamber (CC) to each other in such a manner that the working gas is circulated back to the combustion chamber (CC) without being released into atmosphere; and **characterized in that**,
at least two condensers (61, 62; 161, 162; 261) that are provided in the circulation path (20, 120), that are supplied with exhaust gas which is discharged from the combustion chamber (CC) and which contains the combustion product and the working gas, and that condense and remove the combustion product, wherein
an exhaust gas inlet (61 a, 161 a, 261a) of the condenser (61, 161, 261) that is closest to the outlet of the combustion chamber (CC) among all the condensers (61, 62; 161, 162; 261) is positioned near the outlet of the combustion chamber (CC), and
the condenser (61, 161, 261) of which the exhaust gas inlet (61a, 161a, 261a) is positioned near the outlet of the combustion chamber (CC) is arranged adjacent to an engine body (10), formed integrally with the engine body (10), or arranged at an exhaust pipe gathering portion (17a) of an exhaust manifold (17).

2. The working gas circulation engine according to claim 1, further comprising:
radiators (64, 67; 164, 67; 264) that are provided for the respective condensers (61, 62; 161, 162; 261); and
water pumps (63, 66; 163, 66; 263) that are provided for the respective condensers (61, 62; 161, 162; 261), and that circulate coolant, which is used to condense the combustion product, between the condensers (61, 62; 161, 162; 261) and the radiators (64, 67; 164, 67; 264).

3. The working gas circulation engine according to claim 1, wherein coolant used to cool an engine body (10) is used in the condenser (61, 161, 261) of which the exhaust gas inlet (61 a, 161a, 261a) is positioned near the outlet of the combustion chamber (CC).

4. The working gas circulation engine according to claim 3, further comprising:
a first coolant passage (81) through which the coolant is introduced from a coolant passage in the engine body (10) into the condenser (161) of which the exhaust gas inlet (161a) is positioned near the outlet of the combustion chamber (CC);
a second coolant passage (82) through which the coolant discharged from the condenser (161), of which the exhaust gas inlet (161a) is positioned near the outlet of the combustion chamber (CC), is returned to the coolant passage in the engine body (10);
a water pump (163) that delivers the coolant in the second coolant passage (82) toward the engine body (10);
a radiator (164) that cools the coolant which has passed through the condenser (161) of which the exhaust gas inlet (161a) is positioned near the outlet of the combustion chamber (CC); and
a control unit (169) that determines whether the coolant that has passed through the condenser (161), of which the exhaust gas inlet (161a) is positioned near the outlet of the combustion chamber (CC), should be returned to the engine body (10) without being cooled in the radiator (164) or after being cooled in the radiator (164).

5. The working gas circulation engine according to claim 1, further comprising:
radiators (64, 67; 164, 67; 264) that are provided for the respective condensers (61, 62, 161, 162; 261); and
water pumps (63, 66; 163, 66; 263) that are provided for the respective condensers (61, 62;161, 162; 261), and that circulate coolant, which is used to condense the combustion product, between the condensers (61, 62; 161, 162; 261) and the radiators (64, 67; 164, 67; 264).

6. The working gas circulation engine according to any one of claims 1 to 5, wherein:
the fuel is hydrogen; and
the working gas is argon.

7. The working gas circulation engine according to any one of claims 1 to 6, wherein the condensers (61, 62; 161, 162; 261) are arranged in tandem in the circulation path (20).

## Patentansprüche

1. Arbeitsgaszirkulationsmaschine, welche aufweist:
eine Brennkammer (CC), welcher ein Brennstoff, dessen Verbrennungsprodukt kondensiert wird, und ein Arbeitsgas, das durch Verbrennung des Brennstoffs Energie erzeugt und ein höheres spezifisches Wärmeverhältnis als Luft hat, zugeführt werden;
ein Zirkulationspfad (20; 120), der einen Einlass und einen Auslass der Brennkammer (CC) auf eine solche Weise miteinander verbindet, dass das Arbeitsgas zurück zur Brennkammer (CC) zirkuliert wird, ohne dabei in die Umgebung abgegeben zu werden; **gekennzeichnet durch**:
zumindest zwei Kondensatoren (61, 62; 161, 162; 261), die in dem Zirkulationspfad (20; 120) vorgesehen sind, denen Abgas zugeführt wird, welches von der Brennkammer (CC) abgegeben wird und das Verbrennungsprodukt und das Arbeitsgas enthält, und die das Verbrennungsprodukt kondensieren und beseitigen, wobei
ein Abgaseinlass (61 a; 161 a; 261 a) des Kondensators (61; 161; 261), der von allen Kondensatoren (61, 62; 161, 162; 261) am nächsten am Auslass der Brennkammer (CC) ist, nahe dem Auslass der Brennkammer (CC) positioniert ist, und
der Kondensator (61; 161; 261), dessen Abgaseinlass (61 a; 161 a; 261 a) nahe dem Auslass der Brennkammer (CC) angeordnet ist, neben einem Motorblock (10) angeordnet ist, integral mit dem Motorblock (10) ausgebildet ist oder an einem Abgasrohrsammelabschnitt (17a) eines Abgaskrümmers (17) angeordnet ist.

2. Arbeitsgaszirkulationsmaschine gemäß Anspruch 1, welche ferner aufweist:
Radiatoren (64, 67; 164, 67; 264), die für die jeweiligen Kondensatoren (61, 62 161, 162; 261) vorgesehen sind; und
Wasserpumpen (63, 66; 163, 66; 263), die für die jeweiligen Kondensatoren (61, 62; 161, 162; 261) vorgesehen sind und die ein Kühlwasser, welches zum Kondensieren des Verbrennungsprodukts verwendet wird, zwischen den Kondensatoren (61, 62; 161, 162; 261) und den Radiatoren (64, 67; 164, 67; 264) zirkulieren.

3. Arbeitsgaszirkulationsmaschine gemäß Anspruch 1, wobei das zum Kühlen eines Motorblocks (10) verwendete Kühlmittel in dem Kondensator (61; 161; 261) verwendet wird, dessen Abgaseinlass (61 a; 161 a; 261 a) nahe dem Auslass der Brennkammer (CC) angeordnet ist.

4. Arbeitsgaszirkulationsmaschine gemäß Anspruch 3, welche ferner aufweist:
eine erste Kühlleitung (81), durch welche das Kühlmittel von einer Kühlmittelleitung in dem Motorblock (10) in den Kondensator (161) eingeführt wird, dessen Abgaseinlass (161 a) nahe dem Auslass der Brennkammer (CC) angeordnet ist;
eine zweite Kühlleitung (82), durch welche das Kühlmittel, das von dem Kondensator (161), dessen Abgaseinlass (161a) nahe dem Auslass der Brennkammer (CC) angeordnet ist, abgegeben wird, zu der Kühlleitung in dem Motorblock (10) zurückgeführt wird;
eine Wasserpumpe (163), welche das Kühlmittel in der zweiten Kühlleitung (82) zum Motorblock (10) transportiert;
einen Radiator (164), der das Kühlmittel kühlt, welches den Kondensator (161) passiert hat, dessen Abgaseinlass (161a) nahe dem Auslass der Brennkammer (CC) angeordnet ist; und
eine Steuereinheit (169), die bestimmt, ob das Kühlmittel, das den Kondensator (161) passiert hat, dessen Abgaseinlass (161a) nahe dem Auslass der Brennkammer (CC) angeordnet ist, ohne Kühlung in dem Radiator (164) oder nach Kühlung in dem Radiator (164) zum Motorblock (10) zurückgeführt werden soll.

5. Arbeitsgaszirkulationsmaschine gemäß Anspruch 1, welche ferner aufweist:
Radiatoren (64, 67; 164, 67; 264), die für die jeweiligen Kondensatoren (61, 62 161, 162; 261) vorgesehen sind; und
Wasserpumpen (63, 66; 163, 66; 263), die für die jeweiligen Kondensatoren (61, 62; 161, 162; 261) vorgesehen sind und die ein Kühlmittel, welches zum Kondensieren des Verbrennungsprodukts verwendet wird, zwischen den Kondensatoren (61, 62; 161, 162; 261) und den Radiatoren (64, 67; 164, 67; 264) zirkulieren.

6. Arbeitsgaszirkulationsmaschine gemäß einem der Ansprüche 1 bis 5, wobei
der Brennstoff Wasserstoff ist; und
das Arbeitsgas Argon ist.

7. Arbeitsgaszirkulationsmaschine gemäß einem der Ansprüche 1 bis 6, wobei
die Kondensatoren (61, 62; 161, 162; 261) in Reihe in dem Zirkulationspfad (20) angeordnet sind.

## Revendications

1. Moteur à circulation de gaz de travail, comportant :
une chambre de combustion (CC) qui est alimentée avec du carburant, dont un produit de combustion est condensé, et du gaz de travail qui développe la puissance avec l'utilisation de la combustion du carburant et qui a un taux de chaleur spécifique plus élevé qu'un taux de chaleur spécifique de l'air ;
un passage de circulation (20, 120) qui relie une entrée et une sortie de la chambre de combustion (CC) l'une à l'autre d'une manière telle que le gaz de travail est renvoyé vers la chambre de combustion sans être libéré dans l'atmosphère ; et **caractérisé en ce que**
au moins deux condenseurs (61, 62 ; 161, 162 ; 261) qui sont prévus dans le passage de circulation (20, 120), qui sont alimentés avec le gaz d'échappement qui est déchargé de la chambre de combustion et qui contient le produit de combustion et le gaz de travail, et qui condensent et retirent le produit de combustion, dans lequel
une entrée de gaz d'échappement (61a, 161a, 261a) du condenseur (61, 161, 261) qui est le plus proche de la sortie de la chambre de combustion (CC) parmi tous les condenseurs (61, 62 ; 161, 162 ; 261) est positionnée près de la sortie de la chambre de combustion (CC), et
le condenseur (61, 161, 261) dont l'entrée de gaz d'échappement (61a, 161a, 261a) est positionnée près de la sortie de la chambre de combustion (CC) est disposé de façon adjacente à un corps de moteur (10), formé d'un seul tenant avec le corps de moteur (10), ou disposé au niveau d'une partie de collecte de tube d'échappement (17a) d'un collecteur d'échappement (17).

2. Moteur à circulation de gaz de travail selon la revendication 1, comportant en outré :
des radiateurs (64, 67 ; 164, 67 ; 264) qui sont prévus pour les condenseurs respectifs (61, 62 ; 161, 162 ; 261) ; et
des pompes à eau (63, 66 ; 163, 66 ; 263) qui sont prévues pour les condenseurs respectifs (61, 62 ; 161, 162 ; 261), et qui font circuler un agent de refroidissement, qui est utilisé pour condenser le produit de combustion, entre les condenseurs (61, 62 ; 161, 162 ; 261) et les radiateurs (64, 67 ; 164, 67 ; 264).

3. Moteur à circulation de gaz de travail selon la revendication 1, dans lequel de l'agent de refroidissement utilisé pour refroidir un corps de moteur (10) est utilisé dans le condenseur (61, 161, 261) dont l'entrée de gaz d'échappement (61a, 161a, 261a) est positionnée près de la sortie de la chambre de combustion (CC).

4. Moteur à circulation de gaz de travail selon la revendication 3, comportant en outré :
un premier passage d'agent de refroidissement (81) à travers lequel l'agent de refroidissement est introduit à partir d'un passage d'agent de refroidissement dans le corps de moteur (10) dans le condenseur (161) dont l'entrée de gaz d'échappement (161a) est positionnée près de la sortie de la chambre de combustion (CC) ;
un deuxième passage d'agent de refroidissement (82) à travers lequel l'agent de refroidissement déchargé du condenseur (161), dont l'entrée de gaz d'échappement (161a) est positionnée près de la sortie de la chambre de combustion (CC), est renvoyé vers le passage d'agent de refroidissement dans le corps de moteur (10) ;
une pompe à eau (163) qui délivre l'agent de refroidissement dans le deuxième passage d'agent de refroidissement (82) vers le corps de moteur (10) ;
un radiateur (164) qui refroidit l'agent de refroidissement qui est passé à travers le condenseur (161) dont l'entrée de gaz d'échappement (161a) est positionnée près de la sortie de la chambre de combustion (CC) ; et
une unité de commande (169) qui détermine si l'agent de refroidissement qui est passé à travers le condenseur (161), dont l'entrée de gaz d'échappement (161a) est positionnée près de la sortie de la chambre de combustion (CC), doit être renvoyé vers le corps de moteur (10) sans être refroidi dans le radiateur (164) ou après avoir été refroidi dans le radiateur (164).

5. Moteur à circulation de gaz de travail selon la revendication 1, comportant en outre :
des radiateurs (64, 67 ; 164, 67 ; 264) qui prévus pour les condenseurs respectifs (61, 62, 161, 162 ; 261) ; et
des pompes à eau (63, 66 ; 163, 66 ; 263) qui sont prévus pour les condenseurs respectifs (61, 62 ; 161, 162 ; 261), et qui font circuler l'agent de refroidissement, qui est utilisé pour condenser le produit de combustion, entre les condenseurs (61, 62 ; 161, 162 ; 261) et les radiateurs (64, 67 ; 164, 67 ; 264).

6. Moteur à circulation de gaz de travail selon l'une quelconque des revendications 1 à 5, dans lequel :
le carburant est de l'hydrogène ; et
le gaz de travail est de l'argon.

7. Moteur à circulation de gaz de travail selon l'une quelconque des revendications 1 à 6, dans lequel les condenseurs (61, 62 ; 161, 162 ; 261) sont disposés en tandem dans le passage de circulation (20).
